(19) **Europäisches Patentamt**
**European Patent Office**
**Office européen des brevets**

(11) **EP 4 224 798 A1**

(12) **EUROPEAN PATENT APPLICATION**
published in accordance with Art. 153(4) EPC

(43) Date of publication:
**09.08.2023 Bulletin 2023/32**

(21) Application number: **21893414.9**

(22) Date of filing: **12.07.2021**

(51) International Patent Classification (IPC):
**H04L 12/10** *(2006.01)*

(52) Cooperative Patent Classification (CPC):
**H04L 12/10**

(86) International application number:
**PCT/CN2021/105659**

(87) International publication number:
**WO 2022/105262 (27.05.2022 Gazette 2022/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.11.2020 CN 202011308475**

(71) Applicant: **Huawei Technologies Co., Ltd.
Shenzhen, Guangdong 518129 (CN)**

(72) Inventors:
• **CAO, Jincan
Shenzhen, Guangdong 518129 (CN)**
• **REN, Chao
Shenzhen, Guangdong 518129 (CN)**
• **XU, Jianhua
Shenzhen, Guangdong 518129 (CN)**
• **DING, Yu
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **POWER SUPPLY MANAGEMENT METHOD, DEVICE AND SYSTEM**

(57) This application discloses a power supply management system, and a power supply management method and apparatus applied to the system. The system includes a power sourcing equipment, a powered device, and a power supply line. The power sourcing equipment sends a second voltage to the powered device to determine a first voltage. The first voltage is a maximum power supply voltage agreed on by the power sourcing equipment and the powered device. The power sourcing equipment supplies power to the powered device based on the first voltage. In this application, the power sourcing equipment supplies power to the powered device based on the maximum power supply voltage that can be supported by the powered device, so that a loss on the power supply line is reduced.

FIG. 1

**Description**

This application claims priority to Chinese Patent Application No. 202011308475.9, filed on November 19, 2020 and entitled "POWER SUPPLY MANAGEMENT METHOD, APPARATUS, AND SYSTEM", which is incorporated herein by reference in its entirety.

**TECHNICAL FIELD**

This application relates to a communication technology, and in particular, to a power supply management method, an apparatus, and a system.

**BACKGROUND**

Power over Ethernet (Power over Ethernet, PoE) uses an Ethernet cable to transmit both Ethernet data and power (power). The power refers to supplied electricity (electricity). As defined in a PoE standard of the Institute of Electrical and Electronics Engineers (Institute of Electrical and Electronic Engineers, IEEE), there are the following PoE devices: a power sourcing equipment (power sourcing equipment, PSE) and a powered device (powered device, PD). The PSE provides power. The PD extracts power.

In 2003, the IEEE released the PoE standard IEEE802.3af, in which the PSE can provide 15.4W power for the PD. In 2009, the PoE standard IEEE802.at was released, in which the PSE can provide 30W power for the PD. In 2017, the IEEE802.3bt standard was released, in which the PSE can provide 90W power for the PD. As a supply power of the PSE is increasing, a current on a power supply line is increasing, and a loss of the PoE system on the power supply line is accordingly increasing. In addition, after the supply power provided by the PSE increases, a transmitted current may cause injury to a human body, but no security requirement is raised in an existing standard.

**SUMMARY**

This application provides a power supply management method, an apparatus, and a system, to reduce a loss of a power supply line and ensure security of the power supply line when a power sourcing equipment supplies power to a powered device, thereby avoiding a security risk.

According to a first aspect, this application discloses a power supply management method, including: determining a first voltage, where the first voltage is a maximum power supply voltage agreed on by a power sourcing equipment and a powered device; and supplying power to the powered device based on the first voltage. The power sourcing equipment can supply power to different powered devices based on different maximum power supply voltages through maximum power supply voltage negotiation between the power sourcing equipment and the powered device, thereby reducing a power supply loss and improving power supply efficiency.

In an optional implementation, the determining a first voltage includes: determining a first current based on a second voltage; and determining the first voltage based on the first current, where the second voltage is a negotiation voltage used by the power sourcing equipment to negotiate the first voltage with the powered device; and the first current is a current returned by the powered device to the power sourcing equipment based on the second voltage. By negotiating with the powered device based on the second voltage, the power sourcing equipment may determine the maximum power supply voltage of the powered device without changing a power supply line.

In an optional implementation, a second current is determined based on a third voltage; and whether the powered device is a valid powered device is determined based on the second current, where the third voltage is a detection voltage used by the power sourcing equipment to detect whether the powered device is a valid powered device; and the second current is a current returned by the powered device to the power sourcing equipment based on the third voltage. By detecting whether the powered device is a valid powered device, the power sourcing equipment may be compatible with a legacy powered device, to ensure that the legacy powered device can also operate normally in a system.

In an optional implementation, the supplying power to the powered device based on the first voltage includes: The power sourcing equipment supplies power to the powered device based on the first voltage when the powered device is a valid powered device.

In an optional implementation, a third current is determined based on a fourth voltage; and a diameter of a power supply line between the power sourcing equipment and the powered device is determined based on the third current, where the fourth voltage is used by the power sourcing equipment to detect the diameter; and the third current is a current returned by the powered device to the power sourcing equipment based on the fourth voltage. By detecting the diameter of the power supply line, the power sourcing equipment may determine whether the power supply line can supply power to the powered device at the maximum power supply voltage, thereby reducing a power supply risk.

In an optional implementation, the power sourcing equipment stops supplying power to the powered device when a port that is of the power sourcing equipment and that is connected to the powered device is overloaded.

In an optional implementation, that the port is overloaded includes: A power supply voltage from the power sourcing equipment to the powered device exceeds the first voltage; or a power supply current from the power sourcing equipment to the powered device exceeds a preset power supply current. Whether to stop supplying power to the powered device is controlled by determining whether the port is overloaded. Therefore, security of a PoE system can be ensured. In addition, power supply is stopped only for the powered device of the overloaded port, so that it is ensured that other powered devices connected to normal ports can operate normally.

In an optional implementation, that the power sourcing equipment stops supplying power to the powered device includes: The power sourcing equipment stops supplying power to the powered device within predetermined time. Stopping supplying power to the powered device within the predetermined time ensures that no injury is caused to the human body when a human body is in contact with the PoE system.

In an optional implementation, when power supply of the power sourcing equipment is abnormal, the power sourcing equipment reduces a voltage or a current for supplying power to the powered device. By determining that the power supply is abnormal, it is ensured that a temperature of the power supply line does not increase due to overload, thereby reducing a security risk.

In an optional implementation, the determining a first current based on a second voltage includes: determining a magnitude of a returned current based on the second voltage and a rated power of the powered device; and determining the first current based on the magnitude of the returned current. The first current is determined based on the second voltage and the rated power of the powered device. Therefore, the power sourcing equipment can supply power to the powered device based on the first voltage determined based on the first current, thereby reducing a loss on the power supply line. In addition, it is also ensured that the powered device can also operate normally when working at a maximum power.

According to a second aspect, this application discloses a power sourcing equipment, including: a current detection circuit, configured to determine a first voltage, where the first voltage is a maximum power supply voltage agreed on by the power sourcing equipment and a powered device; and a power supply circuit, configured to supply, by the power sourcing equipment, power to the powered device based on the first voltage.

In an optional implementation, the current detection circuit is configured to: determine the first voltage based on a first current, where the first current is a current returned by the powered device to the power sourcing equipment based on a second voltage; and the second voltage is a negotiation voltage used by the power sourcing equipment to negotiate the first voltage with the powered device.

In an optional implementation, the current detection circuit is further configured to: determine whether the powered device is a valid powered device based on a second current, where the second current is a current returned by the powered device to the power sourcing equipment based on a third voltage; and the third voltage is a detection voltage used by the power sourcing equipment to detect whether the powered device is a valid powered device.

In an optional implementation, the power supply circuit is configured to: supply power to the powered device based on the first voltage when the powered device is a valid powered device.

In an optional implementation, the current detection circuit is further configured to: determine a diameter of a power supply line between the power sourcing equipment and the powered device based on a third current, where the third current is a current returned by the powered device to the power sourcing equipment based on a fourth voltage; and the fourth voltage is used by the power sourcing equipment to detect the diameter.

In an optional implementation, the power sourcing equipment further includes a protection circuit, configured to control the power supply circuit to stop supplying power to the powered device when a port that is of the power sourcing equipment and that is connected to the powered device is overloaded.

In an optional implementation, that the port is overloaded includes: A power supply voltage from the power sourcing equipment to the powered device exceeds the first voltage; or a power supply current from the power sourcing equipment to the powered device exceeds a preset power supply current.

In an optional implementation, the protection circuit is further configured to: stop supplying power to the powered device within predetermined time.

In an optional implementation, the protection circuit is further configured to: reduce, when power supply of the power sourcing equipment is abnormal, a voltage or a current for supplying power to the powered device.

According to a third aspect, this application discloses a powered device, including: a control circuit, configured to trigger a first current based on a second voltage sent by a power sourcing equipment; and a switch circuit, configured to return the first current to the power sourcing equipment, where the first current is used by the power sourcing equipment to determine a first voltage, the second voltage is a negotiation voltage used by the power sourcing equipment to negotiate the first voltage with the powered device, and the first voltage is a maximum power supply voltage agreed on by the power sourcing equipment and the powered device.

In an optional implementation, the triggering a first current includes: The control circuit determines, based on the second voltage and a rated power of the powered device, a magnitude of a current returned to the power sourcing equipment; and triggers the switch circuit based on the magnitude of the returned current, so that the switch circuit generates the first current.

In an optional implementation, the control circuit is further configured to trigger a second current based on a third voltage sent by the power sourcing equipment; and the switch circuit is further configured to return the second current to the power sourcing equipment, where the second current is used by the power sourcing equipment to determine whether the powered device is a valid powered device.

In an optional implementation, the control circuit is further configured to: trigger a third current based on a fourth voltage sent by the power sourcing equipment; and the switch circuit is further configured to return the third current to the power sourcing equipment, where the third current is used by the power sourcing equipment to determine a diameter of a power supply line between the power sourcing equipment and the powered device.

In an optional implementation, the control circuit is further configured to trigger a fourth current based on a fifth voltage sent by the power sourcing equipment; and the switch circuit is further configured to return the fourth current to the power sourcing equipment, where the fourth current is used by the power sourcing equipment to determine the rated power of the powered device.

In an optional implementation, the powered device further includes: when the powered device is connected to an external powered device, the rated power of the powered device includes a rated power of the external powered device.

In an optional implementation, when the powered device is connected to the external powered device, the control circuit notifies the power sourcing equipment to renegotiate the first voltage of the powered device.

According to a fourth aspect, this application discloses a power supply system, including a power sourcing equipment, a powered device, and a power supply line. The power sourcing equipment is the power sourcing equipment disclosed in the second aspect, the powered device is the powered device disclosed in the third aspect, and the power supply line is configured to connect the power sourcing equipment and the powered device.

According to a fifth aspect, this application discloses a chip. The chip is configured to implement the method according to the first aspect or the implementations of the first aspect.

According to a sixth aspect, this application discloses a chip. The chip is configured to: trigger a first current based on a second voltage sent by a power sourcing equipment; and return the first current to the power sourcing equipment. The first current is used by the power sourcing equipment to determine a first voltage, the second voltage is a negotiation voltage used by the power sourcing equipment to negotiate the first voltage with the powered device, and the first voltage is a maximum power supply voltage agreed on by the power sourcing equipment and the powered device.

For advantageous effects of the second aspect, the third aspect, the fourth aspect, the fifth aspect, and the sixth aspect of this application, refer to the first aspect and the implementations thereof.

## BRIEF DESCRIPTION OF DRAWINGS

FIG. 1 is a schematic diagram of a PoE system according to an embodiment of this application;
FIG. 2 is a schematic diagram of a power supply parameter of a PoE system according to an embodiment of this application;
FIG. 3 is a schematic diagram of a structure of a power sourcing equipment according to an embodiment of this application;
FIG. 4 is a schematic diagram of a structure of a powered device according to an embodiment of this application;
FIG. 5 is a schematic diagram of a structure of a switch circuit according to an embodiment of this application; and
FIG. 6 is a schematic diagram of another PoE system according to an embodiment of this application.

## DESCRIPTION OF EMBODIMENTS

To make a person skilled in the art better understand the technical solutions in this application, the following clearly describes the technical solutions in embodiments of this application with reference to the accompanying drawings in embodiments of this application.

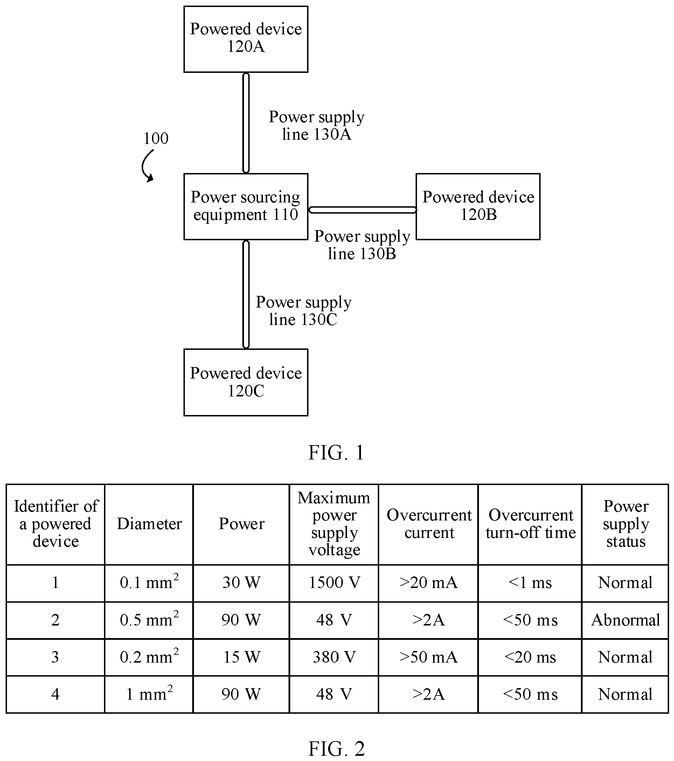

As shown in FIG. 1, a PoE system 100 includes a power sourcing equipment 110, powered devices 120, and power supply lines 130. The power sourcing equipment 110 is connected to a plurality of different powered devices 120 (a powered device 120A, a powered device 120B, and a powered device 120C) through a plurality of power supply lines 130 (a power supply line 130A, a power supply line 130B, and a power supply line 130C). The power supply lines 130 may be optical cables or cables of a cat5e type or cat6 type, or the like.

To reduce a power loss on the power supply line 130, the power sourcing equipment 110 may supply power to the powered device 120 at a power supply voltage as high as possible. Given a constant diameter of the power supply line 130, a higher power supply voltage indicates a smaller transmission loss of the power supply line 130. Because different powered devices have different rated powers and require different operating currents, the power sourcing equipment 110 needs to negotiate a first voltage of the powered device 120 with each powered device 120. The first voltage is a maximum power supply voltage that can be borne by the powered device 120, and is denoted as $V_h$ in this application.

The power sourcing equipment 110 may send a negotiation voltage to the powered device 120, to negotiate the first voltage. In addition to negotiating the first voltage, the power sourcing equipment 110 further needs to determine other power supply parameters, for example, determining whether the powered device 120 is a valid powered device, determining a rated power of the powered device 120, and determining a diameter of a power supply line 130 connected to the powered device 120. Therefore, the power sourcing equipment 110 may further send a detection voltage to the powered device 120, to determine the power supply parameters.

The power sourcing equipment 110 and the powered device 120 may agree on different voltages to implement different functions. For example, the negotiation voltage is used to negotiate the first voltage, and the detection voltage is used to detect whether the powered device is a valid powered device, or detect a rated power of the powered device, or detect a diameter of a power supply line connected to the powered device. For ease of description, in this application, the negotiation voltage used to negotiate the first voltage is referred to as a second voltage, and a negotiation voltage value is $V_a$; the detection voltage used to detect whether the powered device is a valid powered device is referred to as a third voltage, and a detection voltage value is $V_b$; the detection voltage used to detect the diameter of the power supply line is referred to as a fourth voltage, and a voltage value is $V_c$; and the detection voltage used to detect the rated power of the powered device is referred to as a fifth voltage, and a detection voltage value is $V_d$. The PoE system 100 may distinguish between different voltages in a manner shown in the following Table 1.

**Table 1**

| Power supply parameters | Voltage |
|---|---|
| Maximum power supply voltage | $V_h$ |
| Negotiation voltage | $V_a$ |
| Validity detection voltage | $V_b$ |
| Diameter detection voltage | $V_c$ |
| Rated power detection voltage | $V_d$ |

In actual deployment, because there is a loss on the power supply line 130, when the powered device 120 receives a corresponding voltage, there is a specific error in actually detected $V_h$, $V_a$, $V_b$, $V_c$, and $V_d$ and a maximum error $\alpha$ may be agreed on. A voltage value within this error range may be used to indicate a corresponding power supply parameter. Therefore, a corresponding power supply parameter/voltage relationship table on the powered device 120 may also be shown in the following Table 2 ($V_a\pm\alpha$ in the table indicates that a voltage range is ($V_a-\alpha$, $V_a+\alpha$]):

**Table 2**

| Power supply parameters | Voltage |
|---|---|
| Maximum power supply voltage | $V_h\pm\alpha$ |
| Negotiation voltage | $V_a\pm\alpha$ |
| Validity detection voltage | $V_b\pm\alpha$ |
| Diameter detection voltage | $V_c\pm\alpha$ |
| Rated power detection voltage | $V_d\pm\alpha$ |

For ease of description, unless otherwise specified, the loss on the power supply line is not considered in this application. The negotiation voltage or the detection voltage corresponding to the power supply parameter is still described in the manner shown in Table 1.

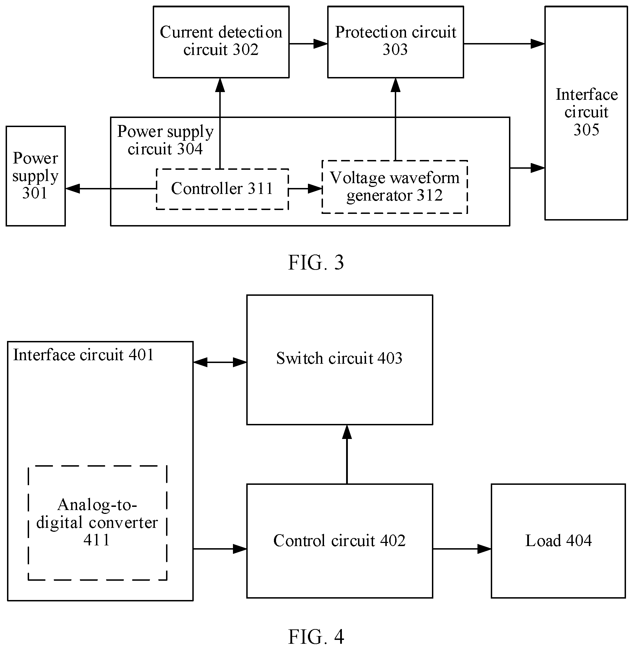

As shown in FIG. 3, the power sourcing equipment 110 includes a current detection circuit 302, a protection circuit 303, and a power supply circuit 304. The power sourcing equipment 110 may be a chip or may be a device including a plurality of chips or circuits. The power sourcing equipment 110 is connected to the power supply line 130 via an interface circuit 305. The interface circuit 305 may be an external circuit or may be an internal circuit of the power sourcing equipment 110. A power supply 301 is configured to supply power to the power sourcing equipment 110, so that the power sourcing equipment 110 supplies power to the powered device 120 via the interface circuit 305. The power supply 301 may be an external power supply or a built-in power supply of the power sourcing equipment 110. The current detection circuit 302 is configured to determine a first current, a second current, a third current, or a fourth current returned by the powered device 120. The current detection circuit 302 may determine a first voltage of the powered device 120 based on the first current, determine whether the connected powered device 120 is a valid powered device based on the second current, determine, based on the third current, a diameter of a power supply line 130 connected to the powered device 120, and determine a rated power of the powered device 120 based on the fourth current. When a port connected to the power supply line 130 is overloaded, the power sourcing equipment 110 may stop supplying power to the port via the protection circuit 303. For example, when the protection circuit 303 detects that a port connected to the power supply line 130B is overloaded, the protection circuit 303 may be disconnected from the power supply line 130B. In this case, other power supply lines such as the power supply line 130A and the power supply line 130C may continue to supply power normally. That the port is overloaded includes: A voltage for the power sourcing equipment 110 to supply power to the powered device 120B exceeds a first voltage, or a current exceeds a preset threshold. The power supply circuit 304 includes a controller 311 and a voltage waveform generator 312. The controller 311 is configured to control the power sourcing equipment 110 to output various voltages shown in Table 1. The voltage waveform generator 312 is configured to convert a power supply voltage transmitted by the power supply 301 into different power supply voltages. A voltage of the power supply 301 usually remains unchanged, for example, 220 V or 110 V Because different powered devices have different rated powers and different operating currents, first voltages of the powered devices are also different. In this application, the first voltage of the powered device may be determined according to formula (1).

$$V = W/I \quad (1)$$

V is a voltage, in volt (V)
W is a rated power, in watt (W)
I is a current, in ampere (A)

For example, it is assumed that the powered device 120A is a camera, and has an operating current of 0.1 ampere and a rated power of 5 W, a first voltage of the powered device 120A is 50 V according to the formula (1). It is assumed that the powered device 120B is a voice over Internet protocol (Voice over Internet Protocol, VoIP) telephone set, and has an operating current of 0.05 ampere and a rated power of 5 W, a first voltage of the powered device 120B is 100 V

Therefore, the power sourcing equipment 110 needs to generate a corresponding first voltage for each powered device. The power supply circuit 304 may generate the first voltage for each powered device using the controller 311 and the voltage waveform generator 312. The voltage waveform generator 312 converts the power supply voltage of the power supply 301 into different power supply voltages based on an input of the controller 311. The controller 311 may control the voltage waveform generator 312 to generate different power supply voltages for different powered devices. In addition, the controller 311 may supply power to the powered device at the power supply voltage of $V_a$, $V_b$, $V_c$, or $V_d$ according to Table 1 as required, to negotiate or detect the power supply parameter.

After the power sourcing equipment 110 supplies power to the powered device 120, the power sourcing equipment 110 may detect a returned current via the current detection circuit 302, and determine a specific value of the power supply parameter based on different magnitudes of the returned current. For example, the power sourcing equipment 110 stores a current/maximum voltage relationship table shown in Table 3. After the power sourcing equipment 110 supplies power to the powered device 120 at the second voltage ($V_a$), the current detection circuit 302 detects the returned first current ($I_a$), and may determine a specific value of the first voltage according to Table 3. For example, when $I_a$ falls within a range ($I_{a1}$, $I_{a2}$], it indicates that the first voltage agreed on by the power sourcing equipment 110 and the powered device 120 is V2, and the power sourcing equipment 110 needs to supply power to the powered device 120 at the power supply voltage V2 during subsequent formal power supply. When $I_a$ falls within a range ($I_{a2}$, $I_{a3}$], it indicates that the power sourcing equipment needs to supply power to the powered device 120 at a power supply voltage V3. In addition, when no range corresponding to $I_a$ is found in Table 3, it indicates that the current negotiation fails. In this case, the power sourcing equipment 110 may send alarm information to notify a management system that the negotiation fails, or supply power to the powered device 120 according to an existing standard such as a standard 802.3bt. The current range (a square bracket represents an inclusion relationship, and a parenthesis represents a non-inclusion relationship) in Table 3 is merely an example, and may be represented in another form during implementation.

**Table 3**

| Current range | Maximum Voltage |
| --- | --- |
| $(0, I_{a1}]$ | V1 |
| $(I_{a1}, I_{a2}]$ | V2 |
| $(I_{a2}, I_{a3}]$ | V3 |
| ... | ... |

To be compatible with an original powered device, the power sourcing equipment 110 further needs to determine whether a connected powered device 120 is a valid powered device. When the power sourcing equipment 110 determines that the powered device 120 is a non-valid powered device, the power sourcing equipment 110 supplies power to the powered device 120 according to an existing standard, for example, the standard 802.3bt. When the power sourcing equipment 110 determines that the powered device 120 is a valid powered device, the power sourcing equipment 110 supplies power to the powered device 120 at the agreed first voltage. Therefore, the power sourcing equipment 110 needs to send the third voltage $(V_b)$ to the powered device 120. The current detection circuit 302 detects the returned second current $(I_b)$, and determines, based on a current/device validity relationship table shown in Table 4, whether the detected powered device 120 is a valid powered device. For example, when $I_b$ falls within a range $(0, I_{b1}]$, it indicates that the current powered device is a valid powered device. When the second current $I_b$ is greater than $I_{b1}$, it indicates that the current powered device is a non-valid powered device. In Table 4, $\infty$ represents infinity.

**Table 4**

| Current range | Whether the powered device is a valid powered device |
| --- | --- |
| $(0, I_{b1}]$ | No |
| $(I_{b1}, \infty]$ | Yes |

The power sourcing equipment 110 further needs to detect the diameter of the power supply line 130 connected to the powered device 120, to reduce a risk caused by an excessively high temperature of the power supply line because the diameter of the power supply line 130 is excessively small. The excessively high temperature of the power supply line causes an insulation layer of the power supply line to be softened and damaged, to cause a plurality of conductors of the power supply line to be in direct contact with each other, resulting in a short circuit and even firing of the power supply line and a fire, or the like. Therefore, the power sourcing equipment 110 needs to send the fourth voltage $(V_c)$ to the powered device 120, and the current detection circuit 302 determines, based on the returned third current $(I_c)$ and a current/resistance relationship table shown in Table 5, a resistance of the power supply line 130 connected to the powered device 120.

**Table 5**

| Current range | Resistance | Diameter of a power supply line |
| --- | --- | --- |
| $(0, I_{c1}]$ | $R_{c1}$ | 0.1 mm$^2$ |
| $(I_{c1}, I_{c2}]$ | $R_{c2}$ | 0.2 mm$^2$ |
| $(I_{c2}, I_{c3}]$ | $R_{c3}$ | 0.5 mm$^2$ |
| $(I_{c3}, I_{c4}]$ | $R_{c4}$ | 1 mm$^2$ |
| ... | ... | ... |

In addition to being related to the diameter, the resistance of the power supply line 130 is related to a length of the power supply line, a resistivity of the power supply line, and a current temperature of the power supply line. For ease of description, a factor related to a resistance change caused by a temperature change is not considered in this application. The diameter of the power supply line 130 may be calculated according to formula (2):

$$S = L \times \rho \div R \ (2)$$

S is the diameter of the power supply line, in square millimeter ($mm^2$)
L is the length of the power supply line, in meter (m)
$\rho$ is the resistivity, in ohm .square millimeter/meter ($\Omega \cdot mm^2/m$)
R is the resistance of the power supply line, in ohm ($\Omega$)

The length of the power supply line may be generally determined using a time domain reflection (time domain reflection, TDR) technology. Therefore, the diameter of the power supply line may be calculated according to the formula (2). For example, the corresponding resistance determined based on the third current $I_c$ is $R_{c2}$ (it is assumed that $R_{c2}$ = 3.5 ohms), the length of the power supply line obtained based on the TDR is 100 meters, and then the diameter of the power supply line 130 is obtained according to the formula (2) (a material of the power supply line 130 is basically copper (whose resistivity is 0.017 $\Omega \cdot mm^2/m$), which is used as a carrier of a conducting wire):

$$S = 0.017 \times 100 \div 3.5 = 0.4857 \approx 0.5 \, mm^2$$

For ease of description, unless otherwise specified, in this application, the diameter is not calculated according to the formula (2); instead, the resistance corresponding to the current range and the diameter of the power supply line corresponding to the current range are directly listed in Table 5.

To ensure that the powered device 120 can operate normally, the power sourcing equipment 110 further needs to determine a rated power of the powered device 120. The rated power is a maximum power that can be supported by the powered device 120. The power sourcing equipment 110 sends the fifth voltage ($V_d$) to the powered device 120, and the current detection circuit 302 determines the rated power of the powered device based on the returned fourth current ($I_d$) and a current/power relationship table shown in Table 6. For example, when $I_d$ falls within a range ($I_{d2}$, $I_{d3}$], it indicates that the rated power of the current powered device is 50 W.

**Table 6**

| Current range | Power of a powered device |
|---|---|
| (0, $I_{d1}$] | 10 W |
| ($I_{d1}$, $I_{d2}$] | 20 W |
| ($I_{d2}$, $I_{d3}$] | 50 W |
| ($I_{d3}$, $I_{d4}$] | 100 W |
| ... | ... |

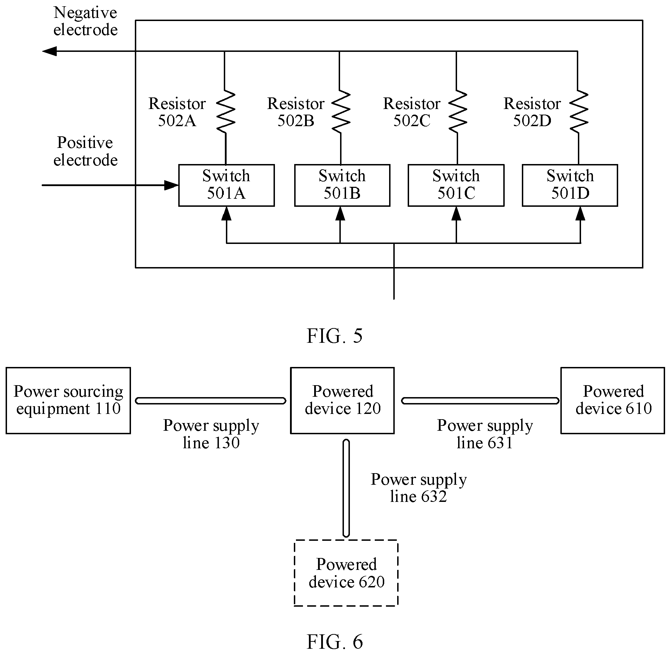

The first current, the second current, the third current, and the fourth current received by the power sourcing equipment 110 are triggered by the powered device 120. As shown in FIG. 4, the powered device 120 includes a control circuit 402 and a switch circuit 403. The powered device 120 may be a chip or may be a device including a plurality of chips or circuits. The powered device 120 is connected to the power supply line 130 via an interface circuit 401, to transmit power provided by the power supply line 130 to another circuit in the powered device 120. The interface circuit 401 may be an internal circuit or an external circuit of the powered device 401. In addition, the powered device 120 may further include one interface circuit or more other interface circuits connected to an external powered device (for example, a powered device 610 shown in FIG. 6). The interface circuit 401 may include an analog-to-digital converter (analog-to-digital converter, ADC) 411. The analog-to-digital converter 411 is configured to detect a current, convert a voltage of the current into a digital signal (a voltage value), and send the digital signal to the control circuit 402. The control circuit 402 may be a microcontroller (microcontroller unit, MCU) or the like. The control circuit 402 looks up Table 1 based on the received voltage value, and identifies whether the current voltage is the second voltage, the third voltage, the fourth voltage, or the fifth voltage. When the control circuit 402 identifies that the current voltage is the second voltage, the control circuit 402 triggers the switch circuit 403 to return the first current. When the control circuit 402 identifies that the current voltage is the fifth voltage, the control circuit 402 triggers the switch circuit 403 to return the fourth current. The powered device 120 may further include a load 404, configured to determine a rated power of the powered device 120.

FIG. 5 is an implementation of the switch circuit 403. The switch circuit 403 includes switches 501 (501A, 501B, 501C, and 501D) and resistors 502 (502A, 502B, 502C, and 502D). Different switches are connected to different resistors (the switch 501A is connected to the resistor 502A, the switch 501B is connected to the resistor 502B, the switch 501C is connected to the resistor 502C, and the switch 501D is connected to the resistor 502D). The switch circuit 403 is connected to the interface circuit 401 via a positive electrode circuit and a negative electrode circuit, and turns on a corresponding switch based on a control signal sent by the control circuit 402. A quantity of switches and a quantity of resistors in FIG. 5 are merely examples, and the switches and the resistors may be added or deleted as required during implementation.

When the control circuit 402 identifies that the current voltage is the second voltage ($V_a$), the control circuit 402 determines, based on a rated power of the load 404, the first voltage supported by the powered device. For example, when the current powered device 120 is a VoIP phone (it is assumed that an operating current is 0.05 ampere, and a rated power is 5 W), according to the formula (1), a maximum power supply voltage supported by the current powered device 120 is 100V By looking up Table 3 (it is assumed that V2 = 100 V), it may be determined that a current range corresponding to the 100V power supply voltage is ($I_{a1}$, $I_{a2}$]. Therefore, the powered device 120 needs to ensure that the returned first current $I_a$ is within the range ($I_{a1}$, $I_{a2}$]. The control circuit 402 may control, according to a formula (3), a switch that is to be turned on by the switch circuit 403:

$$R = V/I \quad (3)$$

R is a resistance, in ohm ($\Omega$)
V is a voltage, in volt (V)
I is a current, in ampere (A)

According to the formula (3), a corresponding resistance range ($R_{a1}$, $R_{a2}$] may be obtained:

$$R_{a1} = V_a/I_{a1}$$

$$R_{a2} = V_a/I_{a2}$$

Based on the resistance range ($R_{a1}$, $R_{a2}$], a resistor (it is assumed that the resistor is 502A) that falls within the range may be found from the resistors 502 (502A, 502B, 502C, and 502D). Therefore, the control circuit 402 controls the switch circuit 403 to turn on the switch 501A, adjusts a magnitude of the first current $I_a$ to be in the range ($I_{a1}$, $I_{a2}$] using the resistor 502A, and finally returns the first current to the power sourcing equipment 110 via the negative electrode circuit. The power sourcing equipment 110 may determine, based on the first current $I_a$ ($I_{a1} < I_a \leq I_{a2}$) and by looking up Table 3, that the first voltage for supplying power to the powered device is V2. The control circuit 402 may determine the first voltage of the powered device 120 based on the rated power and an operating current of the load 404 according to the formula (1).

When the control circuit 402 identifies that the current voltage is the third voltage ($V_b$), the powered device 400 determines, by looking up Table 4, that a magnitude of the second current that needs to be returned should fall within the range (0, $I_{b1}$]. Therefore, a resistance corresponding to $I_{b1}$ may be calculated according to the formula (3):

$$R_{b1} = V_b/I_{b1}$$

It can be learned from the formula (3) that a larger resistance indicates a smaller current. Therefore, a resistance range corresponding to the second current is ($R_{b1}$, $\infty$) ($\geq R_{b1}$). According to the resistance range ($R_{b1}$, $\infty$), the control circuit 402 may find a resistor (it is assumed that the resistor is the resistor 502B) that falls within the range from the resistors 502 (502A, 502B, 502C, and 502D). Therefore, the control circuit 402 controls the switch circuit 403 to turn on the switch 501B, adjusts a magnitude of the second current $I_b$ to be in the range (0, $I_{b1}$] using the resistor 502B, and finally returns the second current to the power sourcing equipment 110 via the negative electrode circuit. The power sourcing equipment 110 looks up Table 4 based on the second current $I_b$ ($I_b \leq I_{b1}$), and determines that the powered device 120 is a valid powered device.

When the control circuit 402 identifies that the current voltage is the fourth voltage ($V_c$), the powered device 120 detects an actual voltage (it is assumed that the actual voltage is $V_e$) and a current $I_e$ using the analog converter 411. In this case, a voltage difference may be calculated.

$$B = V_c - V_e$$

The resistance of the power supply line is determined according to a formula (4).

$$R_e = \beta/I_e \ (4)$$

Table 5 is looked up based on the resistance $R_e$ (it is assumed that $R_e=R_{c2}$), and it may be determined that the diameter of the power supply line is 0.2 mm². The current range of the diameter is $(I_{c1}, I_{c2}]$. The control circuit 402 determines a resistance range $(R_{c1}, R_{c2}]$ of the third current $I_c$ according to a formula (3):

$$R_{c1} = V_c/I_{c1}$$

$$R_{c2} = V_c/I_{c2}$$

Based on the resistance range $(R_{c1}, R_{c2}]$, the control circuit 402 may find a resistor (it is assumed that the resistor is 502C) that falls within the range from the resistors 502 (502A, 502B, 502C, and 502D). Therefore, the control circuit 402 controls the switch circuit 403 to turn on the switch 501C, adjusts a magnitude of the third current $I_c$ to be in the range $(I_{c1}, I_{c2}]$ using the resistor 502C, and finally returns the third current to the power sourcing equipment 110 via the negative electrode circuit. The power sourcing equipment 110 may determine, based on the third current $I_c$ $(I_{c1} < I_c \leq I_{c2})$ and Table 5, that the diameter of the power supply line connected to the powered device is 0.2 mm².

When the control circuit 402 identifies that the current voltage is the fifth voltage $(V_d)$, the powered device 110 may look up Table 6 based on the rated power (it is assumed that the rated power is 20 W) of the load 404, and determine a corresponding resistance range $(R_{d1}, R_{d2}]$ based on a current range $(I_{d1}, I_{d2}]$ of the load 404.

$$R_{d1} = V_d/I_{d1}$$

$$R_{d2} = V_d/I_{d2}$$

Based on the resistance range $(R_{d1}, R_{d2}]$, the control circuit 402 may find a resistor (it is assumed that the resistor is 502D) that falls within the range from the resistors 502 (502A, 502B, 502C, and 502D). Therefore, the control circuit 402 controls the switch circuit 403 to turn on the switch 501D, adjusts a magnitude of the fourth current $I_d$ to be in the range $(I_{d1}, I_{d2}]$ using the resistor 502D, and finally returns the fourth current to the power sourcing equipment 110 via the negative electrode circuit. The power sourcing equipment 110 may determine, based on the fourth current $I_d$ $(I_{d1} < I_d \leq I_{d2})$ by looking up Table 6, that the rated power of the powered device is 20 W.

In actual deployment, the powered device 120 may further be connected to an external powered device via another interface circuit, and supply power to the external powered device. In other words, the powered device 120 may further serve as a power sourcing equipment to supply power to the external powered device. As shown in FIG. 6, the powered device 120 is connected to the power sourcing equipment 110 through the power supply line 130, and is connected to a powered device 610 through a power supply line 631. The power sourcing equipment 110 sends the second voltage to the powered device 120, to negotiate the first voltage of the powered device 120. Before returning the first current to the power sourcing equipment 110, the powered device 120 needs to first detect a rated power of the powered device 610. Therefore, similar to a process in which the power sourcing equipment 110 detects the rated power of the powered device 120, the powered device 120 sends the fifth voltage to the powered device 610 to detect the rated power (it is assumed that the rated power is 50 W) of the powered device 610. Then, the powered device 120 (it is assumed that a power of a load of the powered device 120 is 50 W) may determine the first voltage (it is assumed that the first voltage is V3) of the powered device 120 based on a total rated power (50 + 50 = 100 W) and an operating current of the powered device 120 or the external device 610 according to the formula (1); and determine a corresponding resistance range $(R_{d3}, R_{d4}]$ based on the current range $(I_{d3}, I_{d4}]$ of the powered device 120 (which indicates that the rated power is 100W) by looking up Table 6:

$$R_{d3} = V_d/I_{d3}$$

$$R_{d4} = V_d/I_{d4}$$

Based on the resistance range $(R_{d3}, R_{d4}]$, the control circuit 402 may find a resistor (it is assumed that the resistor is 502E, which is not shown in FIG. 5) that falls within the range from the resistors 502, and adjust, using the resistor 502E, the first current $I_a$ to fall within the range ($I_{d3}$, $I_{d4}$], so as to determine the first current returned to the power sourcing equipment 110. After the power sourcing equipment 110 negotiates the first voltage (V3) with the powered device 120 and detects the total rated power (100 W) of the powered device 120, the power sourcing equipment 110 can supply power to the powered device 120 at the first voltage V3. In this way, it can be ensured that the powered device 120 and the powered device 610 operate normally at the same time.

In a power supply process, when the powered device 120 is connected to a new powered device, for example, a powered device 620, and after the powered device 120 completes tasks such as negotiating a first voltage with the powered device 620, detecting whether the powered device 620 is a valid powered device, detecting a diameter of a power supply line 632 connected to the powered device 620, and detecting a rated power of the powered device 620, the powered device 120 may notify, via the control circuit 402, the power sourcing equipment 110 to reinitiate tasks such as negotiating the first voltage of the powered device 120 and detecting the rated power of the powered device 120.

To ensure secure running of the PoE system 100, when a port connected to a powered device is overloaded, the power sourcing equipment 110 may stop supplying power to the powered device via the protection circuit 303. The power sourcing equipment 110 may set, according to a safety requirement of an IEC60479-1 standard, an overload current threshold or voltage threshold of the port using the controller 311, and set turn-off time of the protection circuit 303 based on a magnitude of an overload current and voltage. The turn-off time is a preset time period, and indicates a longest time for which the protection circuit 303 controls the power sourcing equipment 110 to stop supplying power to the powered device when the power supply current or the power supply voltage is greater than the threshold. By setting the turn-off time, it can be ensured that when the PoE system 100 is overloaded, for example, when a human body is in contact with the power supply line 130 because an insulator of the power supply line 130 is broken, the PoE system does not cause injury to the human body. FIG. 2 is an overload configuration table according to an embodiment of this application. The overload configuration table records configuration information of different powered devices. A powered device 1 (which may be the powered device 120 in FIG. 1) is used as an example. The power sourcing equipment 110 supplies power to the powered device 1 at a maximum voltage 1500 V When the power supply system is abnormal, and the power supply voltage of the power sourcing equipment 110 exceeds 1500 V or the power supply current of the power sourcing equipment 110 exceeds 20 mA, the protection circuit 303 can ensure that the power sourcing equipment 110 stops supplying power to the powered device 1 within 1 ms. According to the IEC60479-1 standard, the human body is in contact with the power supply line within 1 ms, no injury is caused to the human body.

That the power supply system is abnormal is further related to the diameter of the power supply line 130 and the rated power of the powered device 120. As shown in FIG. 2, both a powered device 2 and a powered device 4 can currently satisfy the safety requirement of the IEC60479-1 standard. However, because a diameter of a power supply line connected to the powered device 2 is only 0.5 mm$^2$, when a power of the powered device is 90 W, a temperature of the power supply line is excessively high. When power supply is abnormal, the power sourcing equipment 110 may stop supplying power to the powered device 120, limit power consumption, or the like, to ensure normal running of the entire PoE system. Power limitation may be implemented by reducing a power supply voltage or current to the powered device 120.

It should be noted that embodiments provided in this application are merely examples. A person skilled in the art may clearly know that, for convenience and conciseness of description, in the foregoing embodiments, embodiments emphasize different aspects, and for a part not described in detail in one embodiment, refer to related descriptions in another embodiment. Features disclosed in embodiments of this application, the claims, and the accompanying drawings may exist independently or in combination. This is not limited herein.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A power supply management method, comprising:

   determining a first voltage, wherein the first voltage is a maximum power supply voltage agreed on by a power sourcing equipment and a powered device; and
   supplying power to the powered device based on the first voltage.

2. The method according to claim 1, wherein the determining a first voltage comprises:

determining a first current based on a second voltage; and
determining the first voltage based on the first current, wherein
the second voltage is a negotiation voltage used by the power sourcing equipment to negotiate the first voltage with the powered device; and
the first current is a current returned by the powered device to the power sourcing equipment based on the second voltage.

3. The method according to claim 1 or 2, wherein the method further comprises:

determining a second current based on a third voltage; and
determining whether the powered device is a valid powered device based on the second current, wherein
the third voltage is a detection voltage used by the power sourcing equipment to detect whether the powered device is a valid powered device; and
the second current is a current returned by the powered device to the power sourcing equipment based on the third voltage.

4. The method according to claim 3, wherein the supplying power to the powered device based on the first voltage comprises:
supplying, by the power sourcing equipment, power to the powered device based on the first voltage when the powered device is a valid powered device.

5. The method according to claim 1 or 2, wherein the method further comprises:

determining a third current based on a fourth voltage; and
determining a diameter of a power supply line between the power sourcing equipment and the powered device based on the third current, wherein
the fourth voltage is used by the power sourcing equipment to detect the diameter; and
the third current is a current returned by the powered device to the power sourcing equipment based on the fourth voltage.

6. The method according to any one of claims 1 to 5, wherein the method further comprises:
stopping, by the power sourcing equipment, supplying power to the powered device when a port that is of the power sourcing equipment and that is connected to the powered device is overloaded.

7. The method according to claim 6, wherein that the port is overloaded comprises:

a power supply voltage from the power sourcing equipment to the powered device exceeds the first voltage; or
a power supply current from the power sourcing equipment to the powered device exceeds a preset power supply current.

8. The method according to claim 6 or 7, wherein the stopping, by the power sourcing equipment, supplying power to the powered device comprises:
stopping, by the power sourcing equipment, supplying power to the powered device within predetermined time.

9. The method according to any one of claims 1 to 8, further comprising:
reducing, when power supply of the power sourcing equipment is abnormal by the power sourcing equipment, a voltage or a current for supplying power to the powered device.

10. The method according to claim 2, wherein the determining a first current based on a second voltage comprises:

determining a magnitude of a returned current based on the second voltage and a rated power of the powered device; and
determining the first current based on the magnitude of the returned current.

11. A power sourcing equipment, comprising:

a current detection circuit, configured to determine a first voltage, wherein the first voltage is a maximum power supply voltage agreed on by the power sourcing equipment and a powered device; and

a power supply circuit, configured to supply power to the powered device based on the first voltage.

12. The power sourcing equipment according to claim 11, wherein the current detection circuit is configured to:

   determine the first voltage based on a first current, wherein
   the first current is a current returned by the powered device to the power sourcing equipment based on a second voltage; and
   the second voltage is a negotiation voltage used by the power sourcing equipment to negotiate the first voltage with the powered device.

13. The power sourcing equipment according to claim 11 or 12, wherein the current detection circuit is further configured to:

   determine whether the powered device is a valid powered device based on a second current, wherein
   the second current is a current returned by the powered device to the power sourcing equipment based on a third voltage; and
   the third voltage is a detection voltage used by the power sourcing equipment to detect whether the powered device is a valid powered device.

14. The power sourcing equipment according to claim 13, wherein the power supply circuit is configured to:
   supply, by the power supply circuit, power to the powered device based on the first voltage when the powered device is a valid powered device.

15. The power sourcing equipment according to claim 11 or 12, wherein the current detection circuit is further configured to:

   determine a diameter of a power supply line between the power sourcing equipment and the powered device based on a third current, wherein
   the third current is a current returned by the powered device to the power sourcing equipment based on a fourth voltage; and
   the fourth voltage is used by the power sourcing equipment to detect the diameter.

16. The power sourcing equipment according to any one of claims 11 to 15, wherein the power sourcing equipment further comprises:
   a protection circuit, configured to control the power supply circuit to stop supplying power to the powered device when a port that is of the power sourcing equipment and that is connected to the powered device is overloaded.

17. The equipment according to claim 16, wherein that the port is overloaded comprises:

   a power supply voltage from the power sourcing equipment to the powered device exceeds the first voltage; or
   a power supply current from the power sourcing equipment to the powered device exceeds a preset power supply current.

18. The power sourcing equipment according to claim 16 or 17, wherein the protection circuit is further configured to:
   stop supplying power to the powered device within predetermined time.

19. The power sourcing equipment according to any one of claims 16 to 18, wherein the protection circuit is further configured to:
   reduce, when power supply of the power sourcing equipment is abnormal, a voltage or a current for supplying power to the powered device.

20. A powered device, comprising:

   a control circuit, configured to trigger a first current based on a second voltage sent by a power sourcing equipment; and
   a switch circuit, configured to return the first current to the power sourcing equipment, wherein
   the first current is used by the power sourcing equipment to determine a first voltage, the second voltage is a negotiation voltage used by the power sourcing equipment to negotiate the first voltage with the powered device, and the first voltage is a maximum power supply voltage agreed on by the power sourcing equipment and the powered device.

21. The powered device according to claim 20, wherein the triggering a first current comprises:
determining, by the control circuit based on the second voltage and a rated power of the powered device, a magnitude of a current returned to the power sourcing equipment; and triggering the switch circuit based on the magnitude of the returned current, so that the switch circuit generates the first current.

22. The powered device according to claim 20 or 21, wherein

the control circuit is further configured to trigger a second current based on a third voltage sent by the power sourcing equipment; and
the switch circuit is further configured to return the second current to the power sourcing equipment, wherein the second current is used by the power sourcing equipment to determine whether the powered device is a valid powered device.

23. The powered device according to any one of claims 20 to 22, wherein

the control circuit is further configured to trigger a third current based on a fourth voltage sent by the power sourcing equipment; and
the switch circuit is further configured to return the third current to the power sourcing equipment, wherein the third current is used by the power sourcing equipment to determine a diameter of a power supply line between the power sourcing equipment and the powered device.

24. The powered device according to claim 23, wherein

the control circuit is further configured to trigger a fourth current based on a fifth voltage sent by the power sourcing equipment; and
the switch circuit is further configured to return the fourth current to the power sourcing equipment, wherein the fourth current is used by the power sourcing equipment to determine the rated power of the powered device.

25. The powered device according to claim 24, wherein
when the powered device is connected to an external powered device, the rated power of the powered device comprises a rated power of the external powered device.

26. The powered device according to claim 25, wherein
when the powered device is connected to the external powered device, the control circuit notifies the power sourcing equipment to renegotiate the first voltage of the powered device.

27. A power supply system, comprising a power sourcing equipment, a powered device, and a power supply line, wherein

the power sourcing equipment is the power sourcing equipment according to any one of claims 11 to 19;
the powered device is the powered device according to any one of claims 20 to 26; and
the power supply line is configured to connect the power sourcing equipment and the powered device.

Powered device
120A

Power supply
line 130A

100

Power sourcing
equipment 110

Power supply
line 130B

Powered device
120B

Power supply
line 130C

Powered device
120C

FIG. 1

| Identifier of a powered device | Diameter | Power | Maximum power supply voltage | Overcurrent current | Overcurrent turn-off time | Power supply status |
|---|---|---|---|---|---|---|
| 1 | $0.1\ mm^2$ | 30 W | 1500 V | >20 mA | <1 ms | Normal |
| 2 | $0.5\ mm^2$ | 90 W | 48 V | >2A | <50 ms | Abnormal |
| 3 | $0.2\ mm^2$ | 15 W | 380 V | >50 mA | <20 ms | Normal |
| 4 | $1\ mm^2$ | 90 W | 48 V | >2A | <50 ms | Normal |

FIG. 2

```
┌─────────────────────┐      ┌─────────────────────┐                    ┌──────────────┐
│  Current detection  │─────▶│  Protection circuit │───────────────────▶│              │
│    circuit 302      │      │         303         │                    │              │
└─────────────────────┘      └─────────────────────┘                    │  Interface   │
            ▲                            ▲                               │   circuit    │
            │                            │                               │     305      │
   ┌────────────────────────────────────────────────────────────────┐   │              │
   │  Power supply                                                   │   │              │
   │  circuit 304    ┌ ─ ─ ─ ─ ─ ─ ─ ─ ┐  ┌ ─ ─ ─ ─ ─ ─ ─ ─ ─ ─ ┐   │   │              │
┌──────┐            │                  │  │                      │   │──▶│              │
│Power │◀───────────  Controller 311    ──▶  Voltage waveform    │    │  │              │
│supply│            │                  │  │  generator 312       │   │   │              │
│ 301  │            └ ─ ─ ─ ─ ─ ─ ─ ─ ┘  └ ─ ─ ─ ─ ─ ─ ─ ─ ─ ─ ┘   │   │              │
└──────┘            └──────────────────────────────────────────────┘   └──────────────┘
```

FIG. 3

```
                              ┌────────────────────────┐
┌─────────────────────────┐   │                        │
│ Interface circuit 401   │   │   Switch circuit 403   │
│                         │◀─▶│                        │
│                         │   │                        │
│  ┌ ─ ─ ─ ─ ─ ─ ─ ─ ─ ┐  │   └────────────────────────┘
│  │                   │  │                ▲
│  │   Analog-to-      │  │                │
│  │ digital converter │  │   ┌────────────────────────┐   ┌──────────────┐
│  │      411          │  │──▶│                        │──▶│              │
│  │                   │  │   │   Control circuit 402  │   │   Load 404   │
│  └ ─ ─ ─ ─ ─ ─ ─ ─ ─ ┘  │   │                        │   │              │
└─────────────────────────┘   └────────────────────────┘   └──────────────┘
```

FIG. 4

Negative
electrode

Positive
electrode

Resistor
502A

Resistor
502B

Resistor
502C

Resistor
502D

Switch
501A

Switch
501B

Switch
501C

Switch
501D

FIG. 5

| Power sourcing equipment 110 | Power supply line 130 | Powered device 120 | Power supply line 631 | Powered device 610 |

Power supply
line 632

Powered
device 620

FIG. 6

## INTERNATIONAL SEARCH REPORT

| | International application No. |
|---|---|
| | **PCT/CN2021/105659** |

**A. CLASSIFICATION OF SUBJECT MATTER**

H04L 12/10(2006.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 以太网, 供电, 受电, 设备, 电压, 电流, 协商, 最高, 最大, 返回, 响应, 过载, ethernet, power supply, power reception, equipment, voltage, current, negotiation, return, response, overload

**C. DOCUMENTS CONSIDERED TO BE RELEVANT**

| Category* | Citation of document, with indication, where appropriate, of the relevant passages | Relevant to claim No. |
|---|---|---|
| X | CN 109597453 A (HUAWEI TECHNOLOGIES CO., LTD.) 09 April 2019 (2019-04-09) description paragraphs [0094]-[0156] | 1-27 |
| A | CN 103891197 A (HEWLETT-PACKARD DEVELOPMENT COMPANY, L.P.) 25 June 2014 (2014-06-25) entire document | 1-27 |
| A | CN 108933671 A (HUAWEI TECHNOLOGIES CO., LTD.) 04 December 2018 (2018-12-04) entire document | 1-27 |
| A | CN 105049216 A (SHANGHAI PHICOMM COMMUNICATION CO., LTD.) 11 November 2015 (2015-11-11) entire document | 1-27 |
| A | US 2017208658 A1 (PHILIPS LIGHTING HOLDING B.V.) 20 July 2017 (2017-07-20) entire document | 1-27 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 September 2021** | **15 October 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

EP 4 224 798 A1

**INTERNATIONAL SEARCH REPORT**
Information on patent family members

International application No.

**PCT/CN2021/105659**

| Patent document cited in search report | | | Publication date (day/month/year) | Patent family member(s) | | | Publication date (day/month/year) |
|---|---|---|---|---|---|---|---|
| CN | 109597453 | A | 09 April 2019 | WO | 2019062282 | A1 | 04 April 2019 |
| | | | | EP | 3684008 | A1 | 22 July 2020 |
| | | | | US | 2020228353 | A1 | 16 July 2020 |
| CN | 103891197 | A | 25 June 2014 | GB | 2508762 | A | 11 June 2014 |
| | | | | WO | 2013062567 | A1 | 02 May 2013 |
| | | | | TW | 201330545 | A | 16 July 2013 |
| | | | | DE | 112011105767 | T5 | 09 October 2014 |
| | | | | US | 2014250327 | A1 | 04 September 2014 |
| CN | 108933671 | A | 04 December 2018 | WO | 2018214590 | A1 | 29 November 2018 |
| | | | | EP | 3637675 | A1 | 15 April 2020 |
| | | | | US | 2020092118 | A1 | 19 March 2020 |
| CN | 105049216 | A | 11 November 2015 | | None | | |
| US | 2017208658 | A1 | 20 July 2017 | CN | 106664210 | A | 10 May 2017 |
| | | | | EP | 3167690 | A1 | 17 May 2017 |
| | | | | JP | 2017520230 | A | 20 July 2017 |
| | | | | WO | 2016005256 | A1 | 14 January 2016 |
| | | | | RU | 2017103724 | A | 08 August 2018 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011308475